# NEUE EUROPÄISCHE PATENTSCHRIFT

(11) **EP 0 508 223 B2**
(45) Veröffentlichungstag und Bekanntmachung des Hinweises auf die Entscheidung über den Einspruch: **20.08.1997**
(45) Hinweis auf die Patenterteilung: 25.05.1994
(21) Anmeldenummer: 92105173.6
(22) Anmeldetag: 26.03.1992
(51) Int. Cl.: F28F 25/08

(54) **Rieseleinbau-Element für Kühltürme**
Splashing element for cooling tower
Elément de ruissellement pour tour de refroidissement

(30) Priorität: 09.04.1991 DE 4111451
(43) Veröffentlichungstag der Anmeldung: 14.10.1992
(73) Patentinhaber: Balcke-Dürr AG, D-40882 Ratingen (DE)
(72) Erfinder: Menzel, Knut, W-4300 Essen 17 (DE); Basse, Hartwig, W-2890 Nordenham (DE)
(74) Vertreter: Stenger, Watzke & Ring Patentanwälte

(56) Entgegenhaltungen:
- EP-A- 0 011 176
- DE-A- 2 312 649
- FR-A- 1 340 526
- FR-A- 1 431 895
- FR-E- 84 609
- FR-E- 87 683
- US-A- 2 615 699
- US-A- 4 014 962
- "Chem.-Ing.-Tech." 58(1986), Nr.1, S. 19-31
- "Verfahrenstechnik", 3/85, S.24

## Beschreibung

Die Erfindung betrifft ein Rieseleinbau-Element für Kühltürme, bestehend aus einer Mehrzahl von rohrförmigen Körpern mit einer der Elementhöhe entsprechenden Länge, die einander berührend und mindestens an ihren Stirnflächen miteinander verbunden zu einem paketartigen Element zusammengefügt sind, dem das zu kühlende Wasser von oben verteilt aufgegeben und das von der Kühlluft im Gegen- und/oder Kreuzstrom durchströmt wird, wobei die rohrförmigen Körper aus Strängen gebildete Gittrrohre aus Kunststoff sind, die parallel zueinander angeordnet sind.
Ein derartiges Rieseleinbau-Element ist aus der Zeitschrift "Verfahrenstechnik", 3/85, Seite 24 bekannt.

Rieseleinbau-Elemente für Kühltürme sind in verschiedenen Ausführungen bekannt. Sie bestehen z.B. aus einzelnen ebenen und/oder gewellten Gitterplatten. Derartige Gitterplatten werden als einzelne Platten im Spritzgußverfahren hergestellt. Wegen dieser diskontinuierlichen Fertigung sind sie sehr teuer. Außerdem erfordern sie ein aufwendiges Montageverfahren, und zwar unter Verwendung zusätzlicher Befestigungsteile. Ein solches Rieseleinbauelement für Kühltürme ist aus der US-PS 4 014 962 bekannt, bei welchem rohrförmige Elemente mit einem über die Länge sich verändernden Querschnitt versehen sind. Die sich daraus ergebenden Rohre mit wellenartiger Silhouette lassen sich unter Bildung von Zwischenräumen aneinanderstellen. Die aneinandergestellten Rohre bilden ein paketartiges Element, welches einem Wärmetauscherpaket entspricht, das aus herkömmlichen Lochplatten hergestellt wurde. Ein Kreuzstrombetrieb kann wegen der geschlossenen Rohre nicht realisiert werden. Gegenüber aus Gitterplatten hergestellten Wärmetauscherpaketen ist der Wirkungsgrad der überaus komplizierten Rohrform vergleichsweise gering.

Aus der FR-A-84 609 ist es bekannt, aus Blech- oder Gitterstreifen Rohre zu wickeln und diese mit stachelartigen Manschetten versehen aneinanderzustellen, um eine Wärmetauscherpackung zu bilden.

In der FR-A-87 683 wird ein Tropfkörperfilterelement zur biologischen Abwasserreinigung beschrieben, bei welchem Kunststoffrohre mit inneren Trennwänden versehen sind.

Der Erfindung liegt die **Aufgabe** zugrunde, die Wärmeaustauschleistung derartiger Rieseleinbau-Elemente zu erhöhen.

Die **Lösung** dieser Aufgabe durch die Erfindung ist dadurch gekennzeichnet, daß die in Längsrichtung des Gitterrohres ausgerichteten Stränge wendelförmig und die rechtwinklig zu diesen Strängen ausgerichteten Stränge nicht durchlaufend, sondern im Bereich der Knotenpunkte zueinander versetzt und schräg verlaufen.

Durch diese erfindungsgemäße Weiterbildung ergibt sich nicht nur eine Leitung des an den wendelförmigen Strängen herabrieselnden Wassers abweichend von der Senkrechten, d.h. unter Verlängerung des Rieselweges, sondern weiterhin eine gezielte ständige Aufteilung und Zusammenführung der an den wendelförmig verlaufenden Strängen entlangströmenden Wassersträhnen im Bereich der Knotenpunkte mittels der schräg zur Rohrlängsachse verlaufenden Querstränge, wodurch gegenüber einer Ausführung mit exakt in Rohrlängsrichtung und rechtwinklig hierzu verlaufenden Strängen ein erhöhter thermisch-hydraulischer Wirkungsgrad der Rieseleinbau-Elemente erzielt wird.

Die Gitterrohre des erfindungsgemäßen Rieseleinbau-Elements können von in einem kontinuierlichen Extrusions- oder Pulltrusionsverfahren preiswert hergestellten Rohren abgetrennt und auf einfache Weise an ihren Stirnflächen zu einem Paket miteinander verbunden werden, beispielsweise durch Schweißen. Neben der Herstellung verbilligt sich somit auch die Montage der erfindungsgemäßen Rieseleinbau-Elemente. Die rohrförmigen Gitterkörper können einen kreisförmigen, ovalen, eckigen bzw. polygonalen Querschnitt aufweisen.

Erfindungsgemäß ist es weiterhin möglich, zwischen zumindest einigen Rohrreihen plattenförmige Elemente zur Versteifung des Pakets anzuordnen.

Gemäß einem weiteren Merkmal der Erfindung kann zumindest an einer Stirnfläche des Pakets zusätzlich zu den durch die Verschweißung erzeugten Materialansammlungen eine Gitterplatte angeordnet sein. Hierdurch läßt sich auf einfache Weise sowohl die Kantenfestigkeit als auch die Gesamtfestigkeit des Rieseleinbau-Elements erhöhen, auch im Hinblick auf die Begehbarkeit derartiger Elemente.

Auf der Zeichnung sind zwei Ausführungsbeispiele von Kühltürmen und eine Ausführungsform der erfindungsgemäßen Rieseleinbau-Elemente dargestellt, und zwar zeigen:
- Fig. 1: einen senkrechten Schnitt eines zwangsbelüfteten Kühlturms mit einer Führung der Kühlluft im Gegenstrom zum zu kühlenden Wasser,
- Fig. 2: einen senkrechten Schnitt durch einen ebenfalls zwangsbelüfteten Kühlturm. bei dem die Kühlluft im Kreuzstrom zum zu kühlenden Wasser geführt wird,
- Fig. 3: eine perspektivische Darstellung eines Teils eines Rieseleinbau-Elements, wie es in den Kühltürmen nach den Figuren 1 und 2 verwendet wird,
- Fig. 4: eine vergrößerte Darstellung eines rohrförmigen Gitterkörpers des in Fig. 3 gezeigten Rieseleinbau-Elements und
- Fig. 5: eine vergrößerte Darstellung der Struktur des Gitterkörpers nach Fig.4.

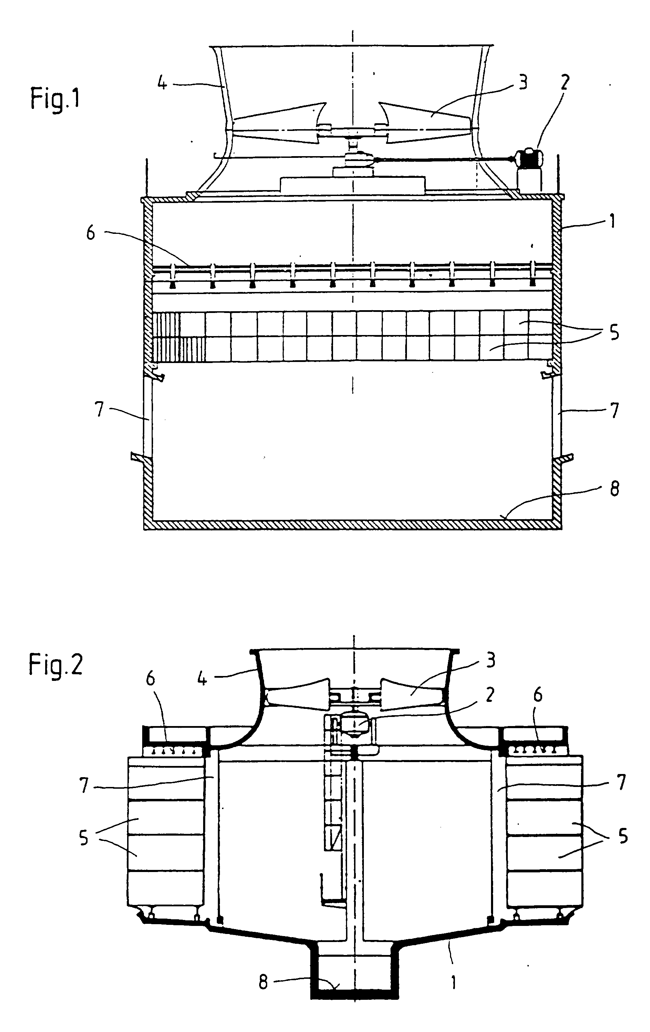

Die in den Figuren 1 und 2 schematisch dargestellten Kühltürme haben jeweils ein Gehäuse 1, an dessen Oberseite ein von einem Motor 2 angetriebener Lüfter 3 in einem hyperbolischen Lüftergehäuse 4 angeordnet ist. Im Inneren des Gehäuses 1 sind Rieseleinbau-Elemente 5 angeordnet, denen zu kühlendes Wasser von oben über eine Verteileinrichtung 6 aufgegeben wird.

Bei dem in Fig. 1 dargestellten Kühlturm wird die vom Lüfter 3 angesaugte Kühlluft im Gegenstrom zu dem zu kühlenden Wasser durch die Rieseleinbau-Elemente 5 geführt. Die Rieseleinbau-Elemente 5 sind zu diesem Zweck in horizontaler Anordnung im gesamten Querschnitt des Gehäuses 1 angeordnet. Die Kühlluft tritt über seitliche Kühlluftöffnungen 7 in das Gehäuse 1 ein und durchströmt die Rieseleinbau-Elemente 5 von unten nach oben. Im unteren Teil des Gehäuses 1 ist eine Auffangwanne 8 für das gekühlte Wasser ausgebildet.

Bei dem in Fig. 2 dargestellten Kühlturm sind die Rieseleinbau-Elemente 5 in den seitlichen Kühlluftöffnungen 7 des Gehäuses 1 angeordnet. Demzufolge befinden sich auch die Verteileinrichtungen 6 für das zu kühlende Wasser im Randbereich des Gehäuses 1. Auch in diesem Fall ist das Gehäuse 1 im unteren Teil mit einer zentralen Auffangwanne 8 für das gekühlte Wasser ausgebildet. Bei dieser Ausführungsform strömt die Kühlluft im Kreuzstrom zu dem senkrecht nach unten durch die Rieseleinbau-Elemente 5 herabströmenden Wassers.

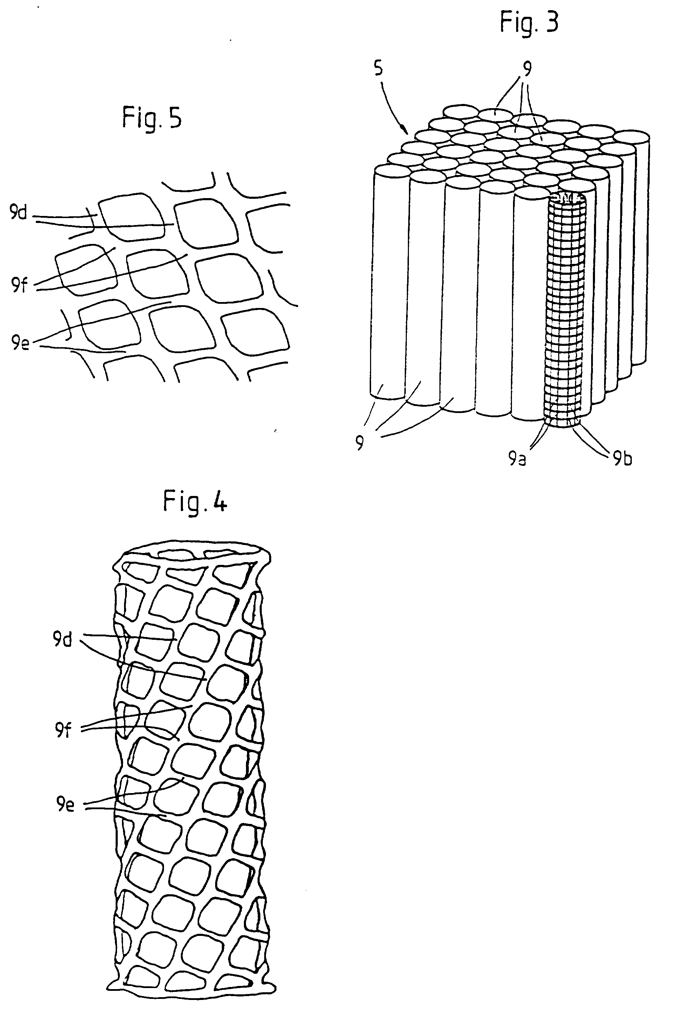

Ein Ausführungsbeispiel für die Rieseleinbau-Elemente 5 der Kühltürme gemäß den Figuren 1 und 2 ist in Fig. 3 gezeigt, und zwar anhand einer perspektivischen Darstellung eines Teils eines derartigen Rieseleinbau-Elements. Die Fig. 3 läßt erkennen. daß dieses paketartige Element aus rohrförmigen Gitterkörpern 9 gebildet ist. von denen ein Gitterkörper 9 in Fig. 4 vergrößert dargestellt ist. Die Gitterkörper 9 werden mit einer der Elementhöhe entsprechenden Länge von einem kontinuierlich hergestellten Rohr abgetrennt und einander berührend zu einem Paket zusammengefügt. Sie sind mindestens an ihren Stirnflächen miteinander verbunden, vorzugsweise durch Verschweißen. Jeder Gitterkörper9 besteht aus sich kreuzenden Strängen 9a und 9b.

Bei der Ausführungsform nach den Figuren 4 und 5 verlaufen die in Längsrichtung des rohrförmigen Gitterkörpers 9 ausgerichteten Stränge 9d in der Art einer Wendel. Die rechtwinklig zu diesen Strängen 9d verlaufenden Stränge 9e sind hierbei so ausgeführt, daß sie nicht durchlaufend ausgebildet sind, sondern im Bereich der Knotenpunkte 9f gegeneinander versetzt sind. Hierdurch wird ein an den Strängen 9d des Gitterkörpers 9 wendelförmig herabrieselnder Wasserfaden im Bereich jedes Knotenpunktes 9f geteilt, so daß sich eine ständige Verzweigung der Wasserfaden ergibt wodurch der Wärmeaustausch mit der Kühlluft erhöht wird.

Da die aus sich kreuzenden Strängen 9d, 9e gebildeten rohrförmigen Gitterkörper 9 von einem kontinuierlich hergestellten Rohr abgetrennt werden können, ergibt sich die Möglichkeit einer kontinuierlichen und damit preiswerten Fertigung. Die mit einer der Höhe des jeweiligen Rieseleinbau-Elements 5 ausgebildeten Gitterkörper 9 werden anschließend einander berührend zu einem Paket zusammengefügt und mindestens an ihren Stirnflächen miteinander verbunden, vorzugsweise durch Verschweißen der aus Kunststoff hergestellten Gitterkörper 9. Die rohrförmigen Gitterkörper 9 können hierbei einen kreisförmigen, ovalen, eckigen oder polygonalen Rohrquerschnitt aufweisen. Sie werden insgesamt parallel zueinander zum Paket zusammengefügt.

Um das hierdurch entstehende Paket zu versteifen. können zwischen zumindest einigen Rohrreihen plattenförmige Elemente zwischen den rohrförmigen Gitterkörpern 9 angeordnet werden. Alternativ oder additiv ist es möglich, zumindest an einer Stirnfläche des Pakets zusätzlich zu den durch die Verschweissung erzeugten Materialansammlungen eine Gitterplatte anzuordnen, wodurch insbesondere die Begehbarkeit der Rieseleinbau-Elemente 5 verbessert wird. Auch diese plattenförmigen Elemente werden vorzugsweise als Gitterplatten aus Kunststoff ausgebildet.

## Patentansprüche

1. Rieseleinbauelement für Kühltürme, bestehend aus einer Mehrzahl von rohrförmigen Körpern mit einer der Elementhöhe entsprechenden Länge, die einander berührend und mindestens an ihren Stirnflächen miteinander verbunden zu einem paketartigen Element zusammengefügt sind, dem das zu kühlende Wasser von oben verteilt aufgegeben und das von der Kühlluft im Gegen- und/oder Kreuzstrom durchströmt wird, wobei die rohrförmigen Körper aus Strängen gebildete Gitterrohre (9) aus Kunststoff sind, die parallel zueinander angeordnet sind,
**dadurch gekennzeichnet,**
daß die in Längsrichtung des Gitterrohres (9) ausgerichteten Stränge (9d) wendelförmig und die rechtwinklig zu diesen Strängen (9d) ausgerichteten Stränge (9e) nicht durchlaufend, sondern im Bereich der Knotenpunkte (9f) zueinander versetzt und schräg verlaufen.

2. Rieseleinbau-Element nach Anspruch 1, dadurch gekennzeichnet, daß die Gitterrohre (9) von einem kontinuierlich hergestellten Rohr abgetrennt sind.

3. Rieseleinbau-Element nach Anspruch 1 oder 2, dadurch gekennzeichnet, daß die Gitterrohre (9) einen kreisförmigen, ovalen, eckigen bzw. polygonalen Querschnitt aufweisen.

4. Rieseleinbau-Element nach einem der Ansprüche 1 bis 3, dadurch gekennzeichnet, daß zwischen zumindest einigen Rohrreihen plattenförmige Elemente zur Versteifung des Pakets angeordnet sind.

5. Rieseleinbau-Element nach den Ansprüchen 1 bis 4, dadurch gekennzeichnet, daß zumindest an einer Stirnfläche des Pakets zusätzlich zu den durch die Verschweißung erzeugten Materialansammlungen eine Gitterplatte angeordnet ist.

6. Rieseleinbau-Element nach den Ansprüchen 4 und 5, dadurch gekennzeichnet, daß die plattenförmigen Elemente als Gitterplatten ausgebildet sind.

## Claims

1. Trickle packing element for cooling towers, consisting of a plurality of tubular bodies which have a length corresponding to the height of the element and which are grouped together, in contact with one another and joined to one another at least at their end faces, to form a packet-like element to which the water to be cooled is fed by distribution from above and through which a countercurrent and/or crosscurrent of cooling air flows, the tubular bodies being grid tubes (9) of plastics material which are formed of strands and are arranged parallel to one another, characterized in that the strands (9d) aligned in the longitudinal direction of the grid tube (9) extend helically and the strands (9e) aligned at a right angle to these strands (9d) do not extend continuously, but extend offset with respect to one another and obliquely in the region of the node points (9f).

2. Trickle packing element according to Claim 1, characterized in that the grid tubes (9) are cut off from a continuously produced tube.

3. Trickle packing element according to Claim 1 or 2, characterized in that the grid tubes (9) have a circular, oval, angular or polygonal cross-section.

4. Trickle packing element according to one of Claims 1 to 3, characterized in that plate-like elements are arranged between at least some of the rows of tubes in order to stiffen the packet.

5. Trickle packing element according to Claims 1 to 4, characterized in that a grid plate is arranged at at least one end face of the packet in addition to the accumulations of material produced by the welding.

6. Trickle packing element according to Claims 4 and 5, characterized in that the plate-like elements are in the form of grid plates.

## Revendications

1. Elément de ruissellement à intégrer, pour tours de refroidissement, composé de plusieurs corps de forme tubulaire, d'une longueur correspondant à la hauteur de l'élément, qui sont rassemblés en un élément du genre paquet en étant en contact les uns des autres et en étant reliés les uns aux autres au moins au niveau de leurs surfaces frontales, l'eau à refroidir étant amenée à l'élément par le haut, de manière répartie, et l'élément étant traversé par l'air de refroidissement selon un courant opposé et/ou croisé, les corps de forme tubulaire étant des tubes en treillis (9) en matière plastique, formés de barres et disposés parallèlement les uns aux autres,
caractérisé en ce que les barres (9d) orientées dans la direction longitudinale du tube en treillis (9), s'étendent en hélice, et les barres (9e) orientées perpendiculairement à ces barres (9d), ne s'étendent pas de manière continue, mais de manière oblique et décalée les unes par rapport aux autres dans la zone des points de jonction (9f).

2. Elément de ruissellement à intégrer selon la revendication 1, caractérisé en ce que les tubes en treillis (9) sont découpés à partir d'un tube fabriqué en continu.

3. Elément de ruissellement à intégrer selon la revendication 1 ou 2, caractérisé en ce que les tubes en treillis (9) présentent une section transversale de forme circulaire, ovale, anguleuse ou polygonale.

4. Elément de ruissellement à intégrer selon l'une des revendications 1 à 3, caractérisé en ce qu'entre au moins quelques rangées de tubes, sont disposées des éléments en forme de plaque, destinés à rigidifier le paquet.

5. Elément de ruissellement à intégrer selon les revendications 1 à 4, caractérisé en ce que sur au moins une face frontale du paquet, est disposée une plaque en treillis, en supplément aux accumulations de matière produites par le soudage.

6. Elément de ruissellement à intégrer selon les revendications 4 et 5, caractérisé en ce que les éléments en forme de plaque sont réalisés en tant que plaque en treillis.
